# EUROPEAN PATENT SPECIFICATION

(11) **EP 2 434 718 B1**
(45) Date of publication and mention of the grant of the patent: **18.09.2013**
(21) Application number: 10801973.8
(22) Date of filing: 23.07.2010
(51) Int. Cl.: H04L 29/06

(54) **HOST IDENTITY TAG SECURITY GUARANTEE METHOD AND SECURITY MANAGEMENT SERVER**
VERFAHREN ZUR GARANTIERUNG DER SICHERHEIT EINES HOSTIDENTITÄTSETIKETTS UND SICHERHEITSMANAGEMENTSERVER
PROCÉDÉ DE GARANTIE DE SÉCURITÉ D'ÉTIQUETTE D'IDENTITÉ D'HÔTE ET SERVEUR DE GESTION DE SÉCURITÉ

(30) Priority: 24.07.2009 CN 200910109131
(43) Date of publication of application: 28.03.2012
(73) Proprietor: Huawei Technologies Co., Ltd., Longgang District, Shenzhen Guangdong 518129 (CN)
(72) Inventor: ZHANG, Dacheng, Shenzhen Guangdong 518129 (CN); SHEN, Shuo, Shenzhen Guangdong 518129 (CN)
(74) Representative: Körber, Martin Hans
(86) International application number: PCT/CN2010/075438
(87) International publication number: WO 2011/009414

(56) References cited:
- CN-A- 1 401 172
- CN-A- 1 661 955
- CN-A- 101 425 919
- DACHENG ZHANG ET AL: "Host Identifier Revocation in HIP; draft-zhang-hip-hi-revocation-00.txt", INTERNET ENGINEERING TASK FORCE, 27 May 2009 (2009-05-27), XP015062554, [retrieved on 2009-05-27]
- MOSKOWITZ R ET AL: "Host Identity Protocol (HIP) Architecture; rfc4423.txt", INTERNET ENGINEERING TASK FORCE, 1 May 2006 (2006-05-01), XP015054970,
- MYERS M ET AL: "X.509 Internet Public Key Infrastructure Online Certificate Status Protocol - OCSP; rfc2560.txt", INTERNET ENGINEERING TASK FORCE, 1 June 1999 (1999-06-01), XP015008343,
- LAGANIER J ET AL: "Host Identity Protocol (HIP) Rendezvous Extension; draft-ietf-hip-rvs-05.txt", INTERNET ENGINEERING TASK FORCE, 7 June 2006 (2006-06-07), XP015045657,
- XIAOHU XU ET AL: "Hierarchical Routing Architecture (HRA)", NEXT GENERATION INTERNET NETWORKS, 2008, 28 April 2008 (2008-04-28), pages 92-99, XP031248133, ISBN: 978-1-4244-1784-1
- DACHENG ZHANG ET AL: "Host Identifier Revocation in HIP; draft-zhang-hip-hi-revocation-02.txt", INTERNET ENGINEERING TASK FORCE, 8 March 2010 (2010-03-08), XP015067991, [retrieved on 2010-03-08]

## Description

This application claims priority to Chinese Patent Application No. 200910109131.2, filed with the Chinese Patent Office on July 24, 2009 and entitled "HOST IDENTITY TAG SECURITY ENSURING METHOD AND SECURITY MANAGEMENT SERVER".

### FIELD OF THE INVENTION

The present invention relates to the fields of computer and communication, and in particular, to a Host Identity Tag (HIT) security ensuring method and a security management server.

### BACKGROUND OF THE INVENTION

In a current Internet protocol stack, an Internet Protocol (IP) address has dual meanings, that is, the IP address is not only used to identify a network topology location of a communication node, but also is used as an identity of the communication node. The dual meanings of the IP address objectively cause close coupling of a transport layer and a network layer. When the IP address is changed due to movement, reallocation or multi-homing of a dynamic IP address, connection in communication may be interrupted accordingly. In order to solve such a problem and realize separation of the identity of the communication node and the network topology location of the communication node, a Host Identity Protocol (HIP) working group of the Internet Engineering Task Force (IETF) proposes a comprehensive solution. This solution introduces a new HIP layer and new name space between the network layer and the transport layer. Therefore, the transport layer is separated from the network layer. The transport layer uses a Host Identity (HI), and the HIP implements the conversion from the HI to the IP address.

The identity of the communication node used by the HIP is the HI, and the HI is essentially a public key in a pair of public and private keys. The length of the HI differs due to different public key system algorithms, so a Host Identity Tag (HIT) with fixed length is usually used in an actual protocol to identify the identity of the communication node. The HIT is a binary number with 128 of the HI gradually declines as time goes by, and the security of the HIT declines accordingly. However, the security ensuring of the HIT is not considered in the current HIP-related protocol.

DACHENG ZHANG ET AL: "Host Identifier Revocation in HIP; draft-zhang-hip-hi-revocation-00.txt", mainly analyzes the key revocation issue with host identities (HI) in the Host Identity Protocol (HIP). As a core component of key management mechanism, key revocation is critical for security systems especially which are expected to execute for a long period. This document also discusses the possible challenges that the designers of HI revocation mechanisms have to face and introduces several possible solutions.

MOSKOWITZ R ET AL: "Host Identity Protocol (HIP) Architecture; rfc4423.txt" describes a Host Identity Protocol (HIP) Architecture and the public Host Identifiers should be stored in DNS; the unpublished Host Identifiers should not be stored anywhere (besides the communicating hosts themselves)... standard public key certificate infrastructures can be applied on the top of HIP.

### SUMMARY OF THE INVENTION

In order to ensure the secure use of an HIT of an HIP protocol in communication, an embodiment of the present invention provides a host identity tag security ensuring method, where the method includes:
recording validity periods of the host identity tags, and/or security states of the host identity tags in a security management server; when a communication is required, querying the security management server for a validity period of a host identity tag of an opposite end host required to be communicated with, and/or a security state of the host identity tag of the opposite end host required to be communicated with; and determining, according to the validity period of the host identity tag of the opposite end host required to be communicated with and/or the security state of the host identity tag of the opposite end host required to be communicated with, whether to communicate with the opposite end host;
wherein the security management server is a domain name system server;
wherein the domain name system server comprises a domain name system server resource record;
the validity periods of the host identity tags and/or the security states of the host identity tags are recorded in the domain name system server resource record, and
when the communication is required, the domain name system server is queried for the validity period of the host identity tag of the opposite end host required to be communicated with, and/or the security state of the host identity tag of the opposite end host required to be communicated with.

An embodiment of the present invention also provides a security management server, where the security management server includes:
a recording unit, configured to record validity periods of the host identity tags, and/or security states of host identity tags;
a querying unit, configured to provide a query for a validity period of a host identity tag of an opposite end host required to be communicated with, and/or a security state of the host identity tag of the opposite end host required to be communicated with; and
a communication determining unit, configured to determine, according to the validity period of the host identity tag of the opposite end host required to be communicated with and/or the security state of the host identity tag of the opposite end host required to be communicated with, whether to communicate with the opposite end host;
wherein the security management server is a domain name system server;
wherein the domain name system server comprises a domain name system server resource record;
the validity periods of the host identity tags and/or the security states of the host identity tags are recorded in the domain name system server resource record, and
when the communication is required, the domain name system server is queried for the validity period of the host identity tag of the opposite end host required to be communicated with, and/or the security state of the host identity tag of the opposite end host required to be communicated with.

Compared with the prior art, through the host identity tag security ensuring method and the security management server provided in the embodiments of the present invention, the validity periods of the HITs, and/or the security states of the HITs are recorded and the query for the validity period of the HITs, and/or the security state of the HIT is provided for the host communication, so it is avoided that the HIT security declines or the HIT is still used after the HIT is revoked, thereby providing the ensuring of the secure use for the HIT of the HIP in the communication.

### BRIEF DESCRIPTION OF THE DRAWINGS

To illustrate the technical solutions of the embodiments of the present invention or the technical solutions of the prior art more clearly, the accompanying drawings for describing the embodiments or the prior art are introduced briefly in the following. Apparently, the accompanying drawings in the following description are only some embodiments of the present invention, and an ordinary person skilled in the art can derive other drawings from the accompanying drawings without creative efforts.
FIG. 1 is a schematic principle view of an HIT security ensuring method according to Embodiment 1 of the present invention;
FIG 2 is a resource record type view of an extended Domain Name System Resource Record (DNS RR) according to Embodiment 2 of the present invention;
FIG. 3 is a schematic principle view of an HIT security ensuring method according to Embodiment 2 of the present invention;
FIG 4 is a schematic principle view of an HIT security ensuring method according to Example 1 not covered by the present invention;
FIG. 5 is a schematic principle view of a security management server according to Example 2 not covered by the present invention;
FIG. 6 is a schematic principle view of an HIT security ensuring method according to Example 2;
FIG. 7a is a structural view of a security management server according to Embodiment 1 of the present invention;
FIG. 7b is a structural view of another security management server according to Embodiment 1 of the present invention;
FIG. 8 is a structural view of a security management server according to Embodiment 2 of the present invention;
FIG. 9 is a structural view of a security management server according to Example 1 of the present invention; and
FIG. 10 is a structural view of a security management server according to Example 2 of the present invention.

### DETAILED DESCRIPTION OF THE EMBODIMENTS

The technical solution of the present invention will be clearly and completely described in the following with reference to the accompanying drawings. It is obvious that the embodiments to be described are only a part rather than all of the embodiments of the present invention. All other embodiments obtained by an ordinary person skilled in the art based on the embodiments of the present invention without creative efforts shall fall within the protection scope of the present invention.

### Embodiment 1

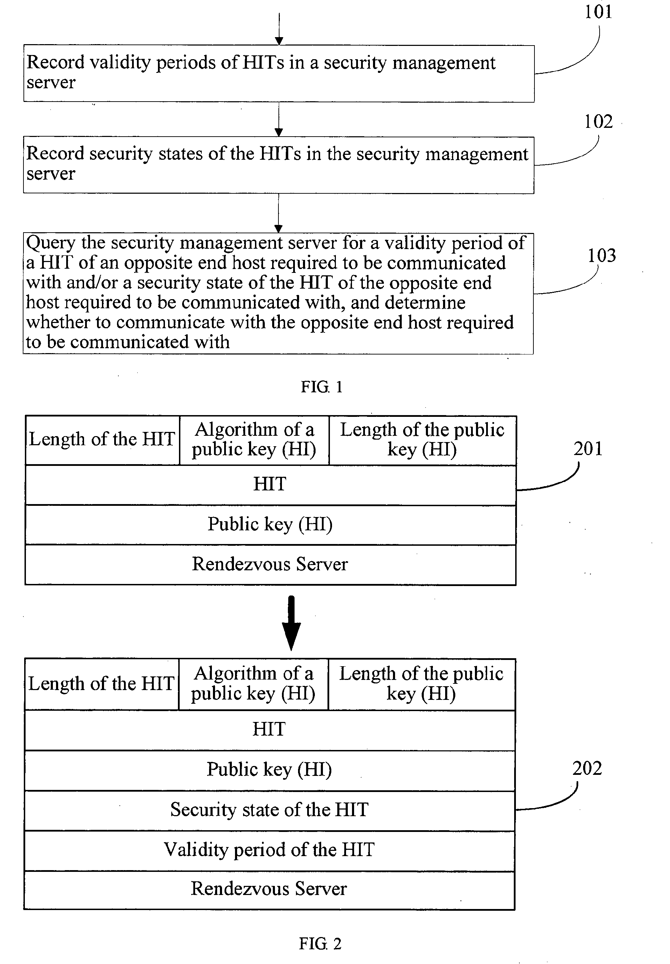

As shown in FIG 1, this embodiment provides an HIT security ensuring method, where the method includes:
Step 101: Validity periods of HITs are recorded in a security management server.
Step 102: Security states of the HITs are recorded in the security management server.
Step 103: The security management server is queried for a validity period of a HIT of an opposite end host required to be communicated with, and/or a security state of the HIT of the opposite end host required to be communicated with, and whether to communicate with the opposite end host required to be communicated with is determined.

In step 103, when a communication is required, the security management server is queried for the validity period of the HIT of the opposite end host required to be communicated with and/or the security state of the HIT of the opposite end host required to be communicated with, and whether to communicate with the opposite end host is determined according to the validity period of the HIT of the opposite end host required to be communicated with and/or the security state of the HIT of the opposite end host required to be communicated with.

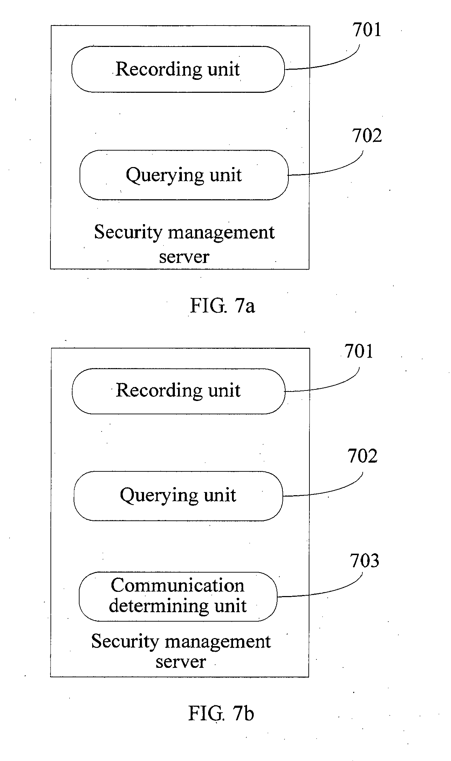

Accordingly, this embodiment also provides a security management server, and as shown in FIG 7a, the security management server includes:
a recording unit 701, configured to record validity periods of HITs and/or security states of HITs; and
a querying unit 702, configured to provide a query for a validity period of a HIT of an opposite end host required to be communicated with and/or a security state of the HIT of the opposite end host required to be communicated with.

Preferably, as shown in FIG 7b, the security management server may also includes a communication determining unit 703 which is configured to determine, according to the validity period of the HIT of the opposite end host required to be communicated and/or the security state of the HIT of the opposite end host required to be communicated with, whether to communicate with the opposite end host.

### Embodiment 2

This embodiment provides an HIT security ensuring method, and by extending a DNS RR (Domain Name System Resource Record) on a DNS (Domain Name System) server, validity periods of HITs and/or security states of HITs are recorded, and a query mechanism of a validity period of a HIT and/or a security state of a HIT is provided. Preferably, an HIP Resource Record (HIP RR) may be extended or redefined in the DNS RR. As shown in 201 of FIG 2, original types of the HIP RR include: the length of the HIT, algorithm of a public key (HI), the length of the public key (HI), HIT, the public key (HI), and a Rendezvous Server. Preferably, validity periods of HITs and/or security states of HITs may be added on the basis of the original resource record types in the HIP RR, and the resource record types are added into the DNS RR. The extended resource record types are as shown in 202 of FIG 2, which include the length of the HIT, the algorithm of the public key (HI), the length of the public key (HI), HIT, the public key (HI), the Rendezvous Server, and the validity periods of the HITs and/or the security states of the HITs.

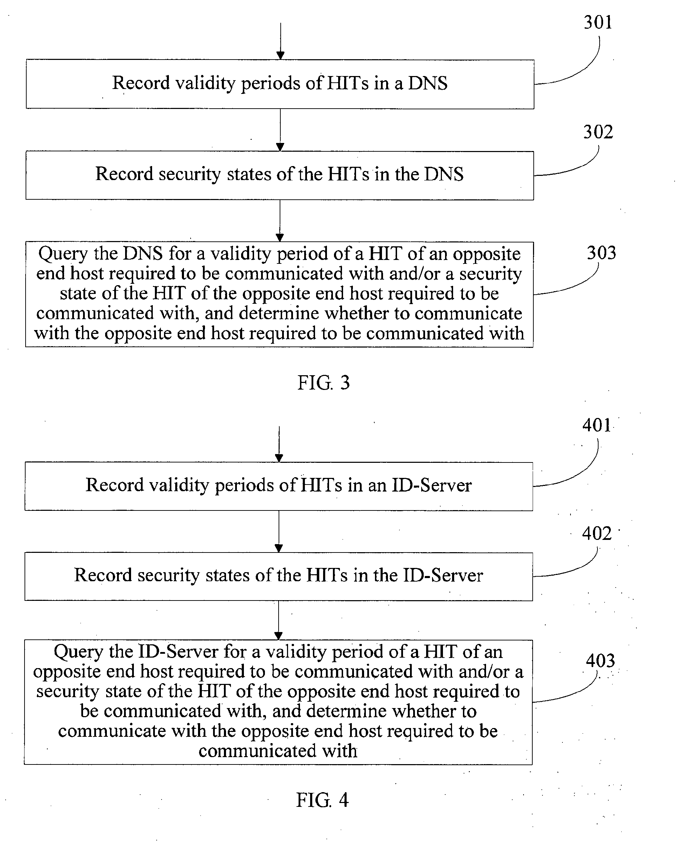

As shown in FIG 3, the HIT security ensuring method includes:
Step 301: A DNS RR is extended, and validity periods of HITs are recorded in a DNS server.

In step 301, if the public key (HI) has a validity period, the validity period of the HIT should not exceed the validity period of the public key (HI). A host may deliberately delay registration and prolong the validity period of the HIT, so a default validity period may be stipulated in the DNS server according to the length of the public key (HI), and it is stipulated that the validity period of the HIT provided by the host cannot be longer than the default validity period and that a start time of the HIT's validity period updated by the host cannot be later than a deadline of the validity period of a previous HIT of the host.

Step 302: The DNS RR is extended, and security states of the HITs are recorded in the DNS server.

In step 302, the security state of the HIT may include: good, unknown, and revoke. Preferably, a security state of a HIT may be defined according to the following policy: the security state of the HIT in a period of time after the registration and authentication is defined as "good", the period of time is determined according to a strict degree of the security policy; the security state of the HIT from the period of time to the deadline of the validity period of the HIT is defined as "unknown"; and the security state of the HIT exceeding the deadline of the validity period of the HIT is defined as "revoke". For example, as to the validity period of the public key with 1024 bits, the validity period thereof is usually two years, and then the security state of the HIT in one year and a half after the registration and authentication is defined as "good"; the security state of the HIT from one year and a half to two years after the registration and authentication is defined as "unknown"; and the security state of the HIT exceeding two years after the registration and authentication is defined as "revoke".

Step 303: The DNS server is queried for the validity period of the HITs and/or the security

In step 303, when a communication is required, a user receives an HIT message header and queries the DNS server for a validity period of a HIT of a opposite end host required to be communicated with, and/or a security state of the HIT of the opposite end host required to be communicated with, through a domain ID in the HIT message header. The DNS server feeds back the validity period of the HIT of the opposite end host required to be communicated with, and/or the security state information of the HIT of the opposite end host required to be communicated with. If the user knows through the query that the validity period of the HIT expires, or the security state of the HIT has some problems (for example, the security state of the HIT is "revoke" or "unknown", which may be specifically set according to the security policy), the user selects to refuse the communication with the opposite end host.

In the method as shown in FIG 3, an executing sequence of steps 301 and 302 is not limited. In this embodiment, any one of the step 301 and the step 302 may be selected, and the two steps may not be used at the same time.

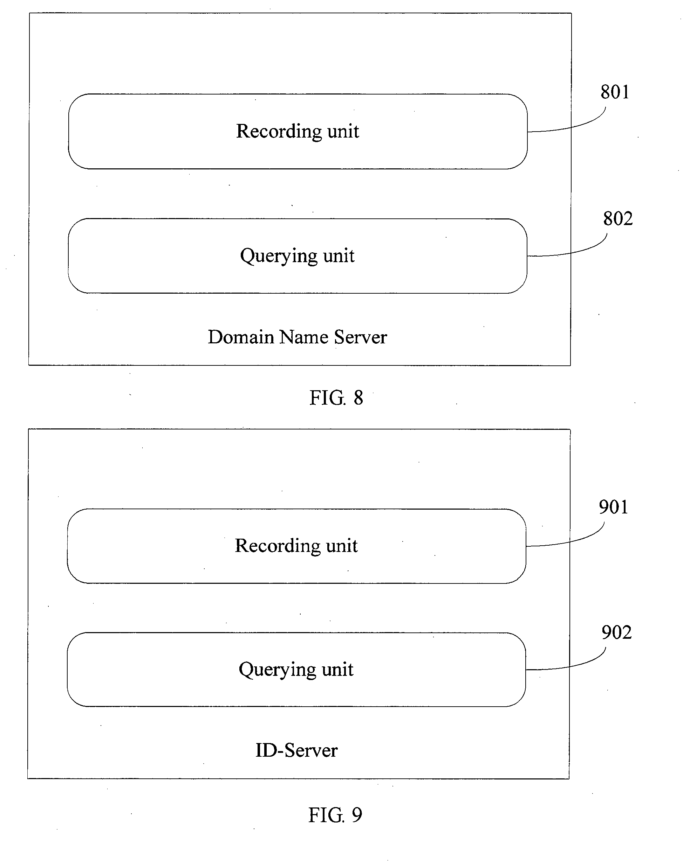

Accordingly, this embodiment also provides a security management server, the security management server includes a DNS server, and as shown in FIG 8, the DNS server includes:
a recording unit 801, configured to record validity periods of HITs and/or security states of HITs; and
a querying unit 802, configured to provide a query for a validity period of a HIT of an opposite end host required to be communicated with, and/or a security state of the HIT of an opposite end host required to be communicated with.

The recording unit 801 includes a DNS RR of the DNS server.

Through the HIT security ensuring method and the security management server provided in this embodiment, the validity periods of HITs and/or the security states of the HITs are recorded in the DNS RR of the DNS server, and the query for the validity period of HITs and/or the security state of the HIT is provided for the user, thereby improving the security of the HIT.

### Example 1

An HIT security ensuring method provided in this example is based on Hierarchical Routing Architecture (HRA). An ID-Server responsible for registration of a host identify (HI) exists in a management domain of the HRA, in which the ID-Server is responsible for the registration and maintenance of the HI, and is configured to manage and maintain validity periods of HITs and/or security states of HITs, and provide a query service for the validity periods of HITs and/or the security states of the HITs.

As shown in FIG 4, this example provides an HIT security ensuring method, where the security states of the HITS.

As shown in FIG 4, this embodiment provides an HIT security ensuring method, where the method includes:
Step 401: The validity periods of the HIT are recorded in an ID-Server.
   In step 401, if a public key (HI) itself has a validity period, the validity period of the HIT should not exceed the validity period of the public key (HI). A host may deliberately delay registration and prolong the validity period of the HIT, so a default validity period may be stipulated in the ID-Server according to the length of the public key (HI), and it is stipulated that the validity period of the HIT provided by the host cannot be longer than the default validity period and that a start time of the HIT' validity period updated by the host cannot be later than a deadline of the validity period of a previous HIT of the host.
Step 402: The security states of the HITs are recorded in the ID-Server.
   In step 402, the security state of the HIT may include: good, unknown and revoke. Preferably, the security state of the HIT may be defined according to the following policy: the security state of the HIT in a period of time after the registration and authentication is defined as "good", in which the period of time is determined according to a strict degree of the security policy; the security state of the HIT from the period of time to the deadline of the validity period of the HIT is defined as "unknown"; and the security state of the HIT exceeding the deadline of the validity period of the HIT is defined as "revoke". For example, as to the validity period of the public key with 1024 bits, the validity period of the public key is usually two years, and then the security state of the HIT in one year and a half after the registration and authentication is defined as "good"; the security state of the HIT from one year and a half to two years after the registration and authentication is defined as "unknown"; and the security state of the HIT exceeding two years after the registration and authentication is defined as "revoke".
Step 403: A user queries the ID-server for a validity period of a HIT of an opposite end host required to be communicated with, and/or a security state of the HIT of an opposite end host required to be communicated with, and determines whether to communicate with the opposite end host required to be communicated with.
   In step 403, when a communication is required, the user transmits a request message carrying the HIT of the opposite end host required to be communicated with to the ID-Server, and after the ID-Server receives the request message, the ID-Server responds the validity period of the HIT of an opposite end host required to be communicated with, and/or the security state of the HIT of the opposite end host required to be communicated with. If the user knows through the query that the validity period of the HIT expires, or the security state of the HIT has some problems (for example, HIT message header.

As shown in FIG. 4, an executing sequence of the steps 401 and 402 is not limited. In this example, any one of the step 401 and the step 402 may be selected, and the two steps may not be used at the same time.

Accordingly, this example also provides a security management server, in which the security management server includes a server responsible for registration of a host identify (HI) in a management domain of a HRA, and as shown in FIG 9, the server includes:
a recording unit 901, configured to record validity periods of HITs and/or security states of HITs; and
a querying unit 902, configured to provide a query for a validity period of a HIT of an opposite end host required to be communicated with and/or a security state of the HIT of an opposite end host required to be communicated with.

Through the HIT security ensuring method and the security management server provided in this example, the validity periods of the HITs and/or the security states of the HITs are recorded in the server responsible for the registration of the HI in the management domain of the HRA, and the query for the validity period of the HIT and/or the security state of the HIT is provided for the user, thereby improving the security of the HIT.

### Example 2

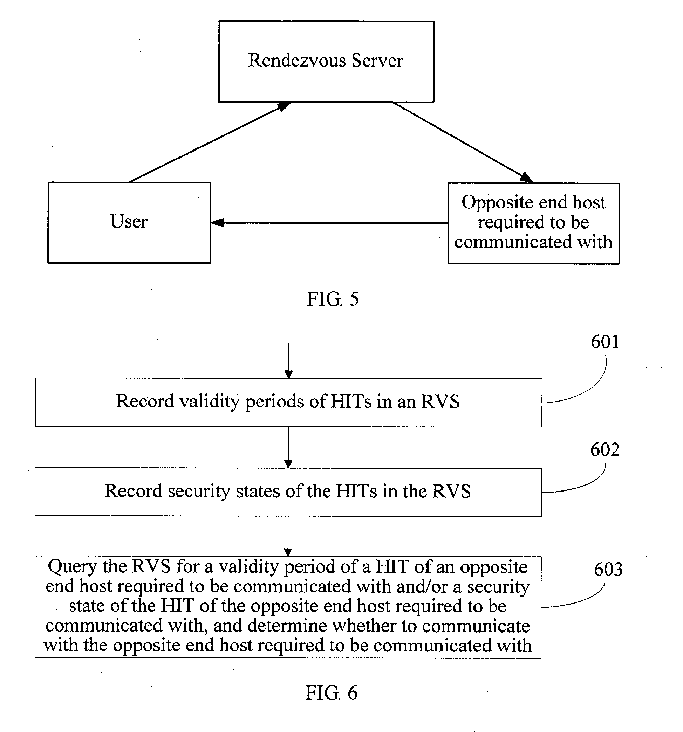

This example provides an HIT security ensuring method, and an Rendezvous Server (RVS) is involved, in which the RVS functions to maintain mapping of HITs and corresponding IP addresses. When a communication is required, and a user does not know the IP address of an opposite end host required to be communicated with, may transmits an initiation message to the RVS. The RVS finds the corresponding IP address according to the HIT, carried in the initiation message, of the opposite end host required to be communicated with, and then forwards the initiation message to the opposite end host required to be communicated with according to the IP address. The opposite end host required to be communicated with may directly communicate with the user after receiving the forwarded message, and a specific process is as shown in FIG 5. In view of the function of maintaining the mapping of the HITs and the corresponding IP addresses borne by the RVS in an HIP protocol, the RVS may be used as a security management server to manage and maintain validity periods of the HITs and security state information of the HITs, and moreover, the RVS includes an RVS storage record, so the storage record may be extended to record the validity periods of the HITs and/or the security state information of the HITs, and provide a query for the validity period of the HITs and/or the security state information of the HIT.

As shown in FIG. 6, this example provides an HIT security ensuring method, where the method includes:
Step 601: An RVS storage record is extended, and validity periods of HITs are recorded in the RVS storage record.
   In step 601, if a public key (HI) has a validity period, the validity period of the HIT should not exceed the validity period of the public key (HI). A host may deliberately delay registration and prolong the validity period of the HIT, so a default validity period may be stipulated in the RVS according to the length of the public key (HI), and it is stipulated that the validity period of the HIT provided by the host cannot be longer than the default validity period and that a start time of the HIT' validity period updated by the host cannot be later than a deadline of the validity period of a previous HIT of the host.
Step 602: The RVS storage record is extended, and security states of the HITs are recorded in the RVS storage record.
   In step 602, the security state of the HIT may include: good, unknown and revoke. Preferably, the security state of the HIT may be defined according to the following policy: the security state of the HIT in a period of time after the registration and authentication is defined as "good", in which the period of time is determined according to a strict degree of the security policy; the security state of the HIT from the period of time to the deadline of the validity period of the HIT is defined as "unknown"; and the security state of the HIT exceeding the deadline of the validity period of the HIT is defined as "revoke". For example, as to the validity period of the public key with 1024 bits, the validity period of the public key is usually two years, and then the security state of the HIT in one year and a half after the registration and authentication is defined as "good"; the security state of the HIT from one year and a half to two years after the registration and authentication is defined as "unknown"; and the security state of the HIT exceeding two years after the registration and authentication is defined as "revoke".
Step 603: A user queries the RVS for a validity period of a HIT of an opposite end host required to be communicated with and/or a security state of the HIT of an opposite end host required to be communicated with, and determines whether to communicate with the opposite end host required to be communicated with.
   In step 603, when the communication is required, the user transmits a request message carrying the HIT of the opposite end host required to be communicated with to the RVS, and the RVS may check the HIT carried in the request message. Only when the validity period of the HIT does not expire or the security state of the HIT conforms to a specific condition, a message forwarding service can be provided, and if the validity period of the HIT expires or the security state of the HIT does not conform to a specific condition, error information is directly transmitted, in which the specific condition may be determined according to a security policy. For example, when the security state of the HIT of the opposite end host required to be communicated with is "good", and the security state of the HIT of the user is "good" or "unknown", the security state of the HIT of the opposite end host required to be communicated with and the security state of the HIT of the user may be considered to conform to the specific condition.

As shown in FIG. 6, an executing sequence of the steps 601 and 602 is not limited. It should be noted that, in this example, any one of the step 601 and the step 602 may be selected, and the two steps may not be used at the same time.

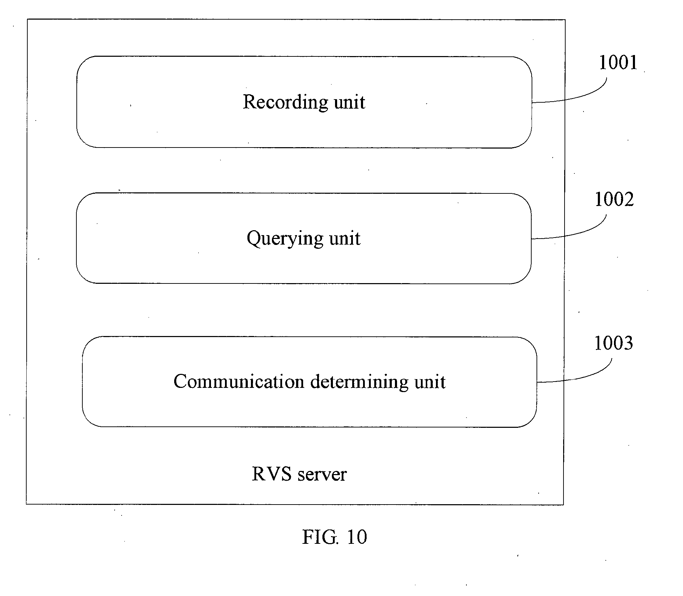

Accordingly, this example also provides a security management server, in which the security management server includes a rendezvous server (RVS), and the RVS functions to maintain mapping of the HITs and the corresponding IP addresses. As shown in FIG 10, the RVS includes:
a recording unit 1001, configured to record validity periods of HITs and/or security states of HITs;
a querying unit 1002, configured to provide a query for a validity period of a HIT of an opposite end host required to be communicated with, and/or a security state of the HIT of an opposite end host required to be communicated with; and
a communication determining unit 1003, configured to determine, according to the validity period of the HIT of an opposite end host required to be communicated with and/or the security state of the HIT of the opposite end host required to be communicated with, whether to communicate with the opposite end host.

Through the HIT security ensuring method and the security management server provided in this embodiment, the validity periods of the HITs and/or the security states of the HITs are recorded in the RVS, and the query for the validity period of the HITs and the security state of the HIT is provided for the user, thereby improving the security of the HIT.

Those of ordinary skill in the art should understand that all or a part of the steps of the method according to the embodiments of the present invention may be implemented by a program instructing relevant hardware. The program may be stored in a computer readable storage medium. When the program is run, the steps of the method according to the embodiments of the present -invention are performed. The storage medium may be any medium that is capable of storing program codes, such as a ROM, a RAM, a magnetic disk, and an optical disk.

The above descriptions are merely specific embodiments of the present invention, but the protection scope of the present invention is not limited hereto. Any modification, equivalent replacement, or improvement made by persons skilled in the art without departing from the protection scope of the present invention is not limited hereto. The protection scope of the present invention is subject to the protection scope of the claims.

## Claims

1. A host identity tag security ensuring method, comprising:
recording (101, 102) validity periods of host identity tags and/or security states of the host identity tags in a security management server;
when a communication is required, querying (103) the security management server for a validity period of a host identity tag of an opposite end host required to be communicated with, and/or a security state of the host identity tag of the opposite end host required to be communicated with; and
determining (103), according to the validity period of the host identity tag of the opposite end host required to be communicated with and/or the security state of the host identity tag of the opposite end host required to be communicated with, whether to communicate with the opposite end host;
wherein the security management server is a domain name system server;
wherein the domain name system server comprises a domain name system server resource record;
the validity periods of the host identity tags and/or the security states of the host identity tags are recorded (301, 302) in the domain name system server resource record, and
when the communication is required, the domain name system server is queried (303) for the validity period of the host identity tag of the opposite end host required to be communicated with, and/or the security state of the host identity tag of the opposite end host required to be communicated with.

2. The method according to claim 1, wherein the querying the security management server for the validity period of the host identity tag of the opposite end host required to be communicated with and/or the security state of the host identity tag of the opposite end host required to be communicated with comprises:
when a user receives a host identity tag message header, querying, by the user, the domain name system server for a validity period of a host identity tag corresponding to a domain flag through domain flag information in the host identity tag message header and/or a security state of the host identity tag corresponding to the domain flag through domain flag information; and
feeding back, by the domain name system server, the validity period of the host identity tag of the opposite end host required to be communicated with and/or the security state information of the host identity tag of the opposite end host required to be communicated with.

3. A security management server, comprising:
a recording unit (701), configured to record validity periods of host identity tags and/or security states of the host identity tags;
a querying unit (702), configured to provide a query for a validity period of a host identity tag of an opposite end host required to be communicated with and/or a security state of the host identity tag of the opposite end host required to be communicated with; and
a communication determining unit (703), configured to determine, according to the validity period of the host identity tag of the opposite end host required to be communicated with and/or the security state of the host identity tag of the opposite end host required to be communicated with, whether to communicate with the opposite end host;
wherein the security management server is a domain name system server;
wherein the domain name system server comprises a domain name system server resource record;
the validity periods of the host identity tags and/or the security states of the host identity tags are recorded (301, 302) in the domain name system server resource record, and
the domain name system server is adapted to be queried (303) for the validity period of the host identity tag of the opposite end host required to be communicated with and/or the security state of the host identity tag of the opposite end host required to be communicated with.

## Patentansprüche

1. Verfahren zum Sicherstellen der Sicherheit des "Host Identity Tags", umfassend:
Aufzeichnen (101, 102) von Gültigkeitsperioden von "Host Identity Tags" und/oder Sicherheitszuständen der "Host Identity Tags" in einem Sicherheitsverwaltungsserver;
wenn eine Kommunikation erforderlich ist, Abfragen (103) des Sicherheitsverwaltungsservers nach einer Gültigkeitsperiode eines "Host Identity Tags" eines Hosts des entgegengesetzten Endes, mit dem kommuniziert werden muss, und/oder eines Sicherheitszustands des "Host Identity Tags" des Hosts des gegenüberliegenden Endes, mit dem kommuniziert werden muss; und
Bestimmen (103), ob mit dem Host des gegenüberliegenden Endes kommuniziert werden soll, gemäß der Gültigkeitsperiode des "Host Identity Tags" des Hosts des gegenüberliegenden Endes, mit dem kommuniziert werden muss, und/oder dem Sicherheitszustand des "Host Identity Tags" des Hosts des gegenüberliegenden Endes, mit dem kommuniziert werden muss;
wobei der Sicherheitsverwaltungsserver ein Domänennamensystemserver ist;
wobei der Domänennamensystemserver eine Domänennamensystemserver-Betriebsmittelaufzeichnung umfasst;
die Gültigkeitsperioden der "Host Identity Tags" und/oder die Sicherheitszustände der "Host Identity Tags" in der Domänennamensystemserver-Betriebsmittelaufzeichnung aufgezeichnet werden (301, 302) und
wenn die Kommunikation erforderlich ist, wird der Domänennamensystemserver nach der Gültigkeitsperiode des "Host Identity Tags" des Hosts des gegenüberliegenden Endes, mit dem kommuniziert werden muss, und/oder dem Sicherheitszustand des "Host Identity Tags" des Hosts des gegenüberliegenden Endes, mit dem kommuniziert werden muss, abgefragt (303).

2. Verfahren nach Anspruch 1, wobei das Abfragen des Sicherheitsverwaltungsservers nach der Gültigkeitsperiode des "Host Identity Tags" des Hosts des gegenüberliegenden Endes, mit dem kommuniziert werden muss, und/oder dem Sicherheitszustand des "Host Identity Tags" des Hosts des gegenüberliegenden Endes, mit dem kommuniziert werden muss, Folgendes umfasst:
wenn ein Benutzer einen "Host Identity Tag"-Nachrichtenheader empfängt, Abfragen des Domänennamensystemservers durch den Benutzer nach einer Gültigkeitsperiode eines "Host Identity Tags", das durch Domänen-Merker-Informationen in dem "Host Identity Tag"-Nachrichtenheader einem Domänen-Merker entspricht, und/oder nach einem Sicherheitszustand des "Host Identity Tags", das durch Domänen-Merker-Informationen dem Domänen-Merker entspricht; und
Rückmelden der Gültigkeitsperiode des "Host Identity Tags" des Hosts des gegenüberliegenden Endes, mit dem kommuniziert werden muss, und/oder der Sicherheitszustandsinformationen des "Host Identity Tags" des Hosts des gegenüberliegenden Endes, mit dem kommuniziert werden muss, durch den Domänennamensystemserver.

3. Sicherheitsverwaltungsserver, umfassend:
eine Aufzeichnungseinheit (701), ausgelegt zum Aufzeichnen von Gültigkeitsperioden von "Host Identity Tags" und/oder Sicherheitszuständen der "Host Identity Tags";
eine Abfrageeinheit (702), ausgelegt zum Bereitstellen einer Anfrage nach einer Gültigkeitsperiode eines "Host Identity Tags" eines Hosts des gegenüberliegenden Endes, mit dem kommuniziert werden muss, und/oder einem Sicherheitszustand des "Host Identity Tags" des Hosts des gegenüberliegenden Endes, mit dem kommuniziert werden muss; und
eine Kommunikationsbestimmungseinheit (703), ausgelegt zum Bestimmen, ob mit dem Host des gegenüberliegenden Endes kommuniziert werden soll, gemäß der Gültigkeitsperiode des "Host Identity Tags" des Hosts des gegenüberliegenden Endes, mit dem kommuniziert werden muss, und/oder dem Sicherheitszustand des "Host Identity Tags" des Hosts des gegenüberliegenden Endes, mit dem kommuniziert werden muss;
wobei der Sicherheitsverwaltungsserver ein Domänennamensystemserver ist;
wobei der Domänennamensystemserver eine Domänennamensystemserver-Betriebsmittelaufzeichnung umfasst;
die Gültigkeitsperioden der "Host Identity Tags" und/oder die Sicherheitszustände der "Host Identity Tags" in der Domänennamensystemserver-Betriebsmittelaufzeichnung aufgezeichnet werden (301, 302) und
der Domänennamensystemserver dafür ausgelegt ist, nach der Gültigkeitsperiode des "Host Identity Tags" des Hosts des gegenüberliegenden Endes, mit dem kommuniziert werden muss, und/oder dem Sicherheitszustand des "Host Identity Tags" des Hosts des gegenüberliegenden Endes, mit dem kommuniziert werden muss, abgefragt (303) zu werden.

## Revendications

1. Procédé pour garantir la sécurité d'une balise d'identité d'hôte, comprenant :
l'enregistrement (101, 102) de périodes de validité de balises d'identité d'hôtes et/ou d'états de sécurité des balises d'identité d'hôtes dans un serveur de gestion de sécurité ;
lorsqu'une communication est exigée, l'interrogation (103) du serveur de gestion de sécurité pour obtenir une période de validité d'une balise d'identité d'hôte d'un hôte d'extrémité opposée avec lequel il est exigé de communiquer, et/ou un état de sécurité de la balise d'identité d'hôte de l'hôte d'extrémité opposée avec lequel il est exigé de communiquer ; et
la détermination (103), conformément à la période de validité de la balise d'identité d'hôte de l'hôte d'extrémité opposée avec lequel il est exigé de communiquer, et/ou à l'état de sécurité de la balise d'identité d'hôte de l'hôte d'extrémité opposée avec lequel il est exigé de communiquer, de la nécessité ou non de communiquer avec l'hôte d'extrémité opposée ;
dans lequel le serveur de gestion de sécurité est un serveur de système de nom de domaine ;
dans lequel le serveur de système de nom de domaine comprend un enregistrement de ressource de serveur de système de nom de domaine ;
les périodes de validité des balises d'identité d'hôtes et/ou les états de sécurité des balises d'identité d'hôtes sont enregistrés (301, 302) dans l'enregistrement de ressource de serveur de système de nom de domaine, et
lorsque la communication est exigée, le serveur de système de nom de domaine est interrogé (303) pour obtenir la période de validité de la balise d'identité d'hôte de l'hôte d'extrémité opposée avec lequel il est exigé de communiquer, et/ou l'état de sécurité de la balise d'identité d'hôte de l'hôte d'extrémité opposée avec lequel il est exigé de communiquer.

2. Procédé selon la revendication 1, dans lequel l'interrogation du serveur de gestion de sécurité pour obtenir la période de validité de la balise d'identité d'hôte de l'hôte d'extrémité opposée avec lequel il est exigé de communiquer et/ou l'état de sécurité de la balise d'identité d'hôte de l'hôte d'extrémité opposée avec lequel il est exigé de communiquer comprend :
lorsqu'un utilisateur reçoit un entête de message de balise d'identité d'hôte, l'interrogation, par l'utilisateur, du serveur de système de nom de domaine pour obtenir une période de validité d'une balise d'identité d'hôte correspondant à un indicateur de domaine par l'intermédiaire d'informations d'indicateur de domaine contenues dans l'entête du message de balise d'identité d'hôte et/ou un état de sécurité de la balise d'identité d'hôte correspondant à l'indicateur de domaine par l'intermédiaire d'informations d'indicateur de domaine ; et
le renvoi, par le serveur de système de nom de domaine, de la période de validité de la balise d'identité d'hôte de l'hôte d'extrémité opposée avec lequel il est exigé de communiquer et/ou des informations d'état de sécurité de la balise d'identité d'hôte de l'hôte d'extrémité opposée avec lequel il est exigé de communiquer.

3. Serveur de gestion de sécurité, comprenant :
une unité d'enregistrement (701), configurée pour enregistrer des périodes de validité de balises d'identité d'hôtes et/ou des états de sécurité des balises d'identité d'hôtes ;
une unité d'interrogation (702), configurée de manière à fournir une interrogation pour obtenir une période de validité d'une balise d'identité d'hôte d'un hôte d'extrémité opposée avec lequel il est exigé de communiquer et/ou un état de sécurité de la balise d'identité d'hôte de l'hôte d'extrémité opposée avec lequel il est exigé de communiquer ; et
une unité de détermination de communication (703), configurée pour déterminer, conformément à la période de validité de la balise d'identité d'hôte de l'hôte d'extrémité opposée avec lequel il est exigé de communiquer, et/ou à l'état de sécurité de la balise d'identité d'hôte de l'hôte d'extrémité opposée avec lequel il est exigé de communiquer, la nécessité ou non de communiquer avec l'hôte d'extrémité opposée ;
dans lequel le serveur de gestion de sécurité est un serveur de système de nom de domaine ;
dans lequel le serveur de système de nom de domaine comprend un enregistrement de ressource de serveur de système de nom de domaine ;
les périodes de validité des balises d'identité d'hôtes et/ou les états de sécurité des balises d'identité d'hôtes sont enregistrés (301, 302) dans l'enregistrement de ressource de serveur de système de nom de domaine, et
le serveur de système de nom de domaine est conçu pour être interrogé (303) pour obtenir la période de validité de la balise d'identité d'hôte de l'hôte d'extrémité opposée avec lequel il est exigé de communiquer, et/ou l'état de sécurité de la balise d'identité d'hôte de l'hôte d'extrémité opposée avec lequel il est exigé de communiquer.
